# EUROPÄISCHE PATENTSCHRIFT

(11) **EP 2 016 830 B1**
(45) Veröffentlichungstag und Bekanntmachung des Hinweises auf die Patenterteilung: **24.06.2009**
(21) Anmeldenummer: 07014354.0
(22) Anmeldetag: 20.07.2007
(51) Int. Cl.: A22C 13/00, B29C 47/00, A23P 1/12

(54) **Vorrichtung und Verfahren zum Herstellen von Würsten**
Device and method for manufacturing sausages
Dispositif et procédé de fabrication de saucisses

(43) Veröffentlichungstag der Anmeldung: 21.01.2009
(73) Patentinhaber: Albert Handtmann Maschinenfabrik GmbH & Co. KG, 88400 Biberach (DE)
(72) Erfinder: Bächtle, Manfred, 88433 Schemmerhofen (DE); Reutter, Siegfried, 88436 Eberhardzell (DE); Schliesser, Markus, 88489 Wain (DE)
(74) Vertreter: Grünecker, Kinkeldey, Stockmair & Schwanhäusser Anwaltssozietät

(56) Entgegenhaltungen:
- EP-A- 0 071 183
- EP-A- 1 114 587
- EP-A- 1 371 293
- WO-A-20/05084447
- US-A- 3 751 202

## Beschreibung

Die vorliegende Erfindung betrifft eine Vorrichtung und ein Verfahren zum Herstellen von Würsten gemäß dem Oberbegriff des Anspruchs 1.

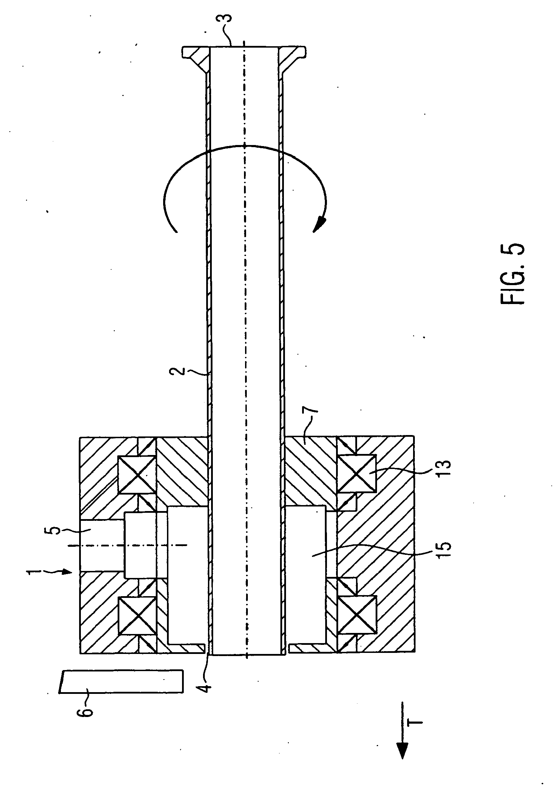

Solche Vorrichtungen und Verfahren sind bereits aus der EP 1 371 293 bekannt. Hier wird eine pastöse Masse (Wurstbrät) mit einem Wursthüllenfilm überzogen und im Anschluss an den Koextrusionsprozess wird der erzeugte Wurststrang abgeteilt. Ein solcher Koextrusionskopf ist beispielsweise in Fig. 5 dargestellt. Die Wursthüllenmasse wird durch eine Extrudierdüse 7 über den Ringspalt 4 auf die durch das Füllrohr 2 zugeführte pastöse Masse aufgebracht. Nach der Koextrusion wird die Wursthülle, die als gelartige Masse (z.B. Alginat) durch den Ringspalt 4 zugeführt wird, durch Zuführung einer Fixierlösung von außen, z.B. Kalziumchloridlösung, verfestigt und für nachfolgende Verarbeitungsschritte, wie beispielsweise Einschnüren oder Abdrehen bereitgestellt.

Aus der EP-A-0071183 ist bereits ein Koextrusionskopf zur Herstellung von gefüllten Backwaren bekannt, wobei das Füllrohr über einen Düsenspalt hervorsteht.

Da der Verfestigungsprozess jedoch eine gewisse Zeit dauert, typischerweise 1 bis 2 Sekunden bis die Hülle belastbar ist, ist es problematisch, direkt im Anschluss an den Koextrusionskopf den Wurststrang einzuschnüren, um beispielsweise einen Abdrehvorgang einzuleiten. Die Wursthülle ist hierfür nicht ausreichend stabil, so dass der Wurststrang abreißt.

Hiervon ausgehend liegt der Erfindung die Aufgabe zugrunde eine einfache Vorrichtung und ein schnelles Verfahren zum Herstellen von Würsten bereitzustellen, die es ermöglichen, eine höher belastbare Wursthülle herzustellen.

Erfindungsgemäß wird die Aufgabe durch die Merkmale der Ansprüche 1 und 9 gelöst.

Gemäß der vorliegenden Erfindung wird nun die Wursthülle nicht mehr direkt auf die aus dem Füllrohr ausgestoßene pastöse Masse aufgebracht, sondern auf das Füllrohr extrudiert. Dazu steht das Füllrohr über den Ringspalt eine Strecke X vor. Das extrudierte Hüllenmaterial kann sich dann auf der Strecke X des vorstehenden Füllrohrs verfestigen. Somit kann eine fortlaufende Wursthülle auf dem Füllrohr erzeugt werden. Erst danach wird die pastöse Masse zugeführt. Dabei wird die Wursthülle auf dem Füllrohr vom Füllrohr abgezogen. Die Hülle ist somit belastbar und es können nachfolgende Verarbeitungsschritte, wie z.B. Einschnüren, Abdrehen, Verdrängen etc. durchgeführt werden. Die Strecke x des verlängerten Füllrohrs dient hier also zusätzlich als Pufferstrecke um Wursthülle direkt auf dem Füllrohr als Vorrat bereitzustellen.

Gemäß der Erfindung weist die Vorrichtung eine Einrichtung zum Zuführen von Fixierlösung für das ausgestoßene Hüllenmaterial auf, wobei die Vorrichtung zumindest in einem Teilbereich der Strecke X, insbesondere am Anfang der Strecke X angeordnet ist. Somit wird ein zuverlässiges und schnelles Fixieren im Bereich der Strecke X gewährleistet. Vorzugsweise ist die Strecke X größer gleich 10 bis 200 mm, kann jedoch auch länger sein. Eine solche Strecke ist ausreichend um das Hüllenmaterial zu verfestigen.

Damit das extrudierte Hüllenmaterial, d.h. die erzeugte Wursthülle sich auf dem Füllrohr in Richtung Füllrohrende bewegen kann, ist es vorteilhaft, wenn das Füllrohr eine Füllrohroberfläche aufweist, die zumindest im Bereich der vorstehenden Strecke X einen niedrigen Gleitreibungskoeffizienten µ, der niedriger als der von poliertem Edelstahl ist (z. B. in einem Bereich von 0,01 bis 0,1) aufweist. Somit ist sichergestellt, dass sich die Wursthülle gut auf den Füllrohr bewegen kann, ohne abzureißen oder beschädigt zu werden. Solche günstigen Gleiteigenschaften können beispielsweise durch eine entsprechende Beschichtung erzielt werden.

Es ist jedoch auch möglich, dass die Vorrichtung zusätzlich oder alternativ eine Gleiteinrichtung umfasst, zum Zuführen eines Gleitmittels zwischen Füllrohr und ausgestoßenem Hüllenmaterial. Dadurch, dass ein Gleitmittel zwischen Füllrohr und Wursthülle erzeugt wird, bleibt die Wursthülle nicht auf dem Füllrohr kleben und reißt nicht. Somit kann der Gleitreibungskoeffizient minimiert werden.

Gemäß einer bevorzugten Ausführungsform weist die Gleitmitteleinrichtung eine Zuführung für Gleitmittel auf, die im Füllrohr angeordnet ist, sowie einen Ringspalt über den das Gleitmittel auf die Oberfläche des um die Strecke X vorstehenden Füllrohrs ausgestoßen wird.

Im Endbereich des Füllrohrs kann dann auch mindestens eine Öffnung eines Rückführkanals für das Gleitmittel vorgesehen sein, um das Gleitmittel abzuführen, derart, dass kein oder nur sehr wenig Gleitmittel zwischen Wursthülle und pastöser Masse eingebracht wird. Alternativ kann auch die Außenseite des Füllrohrs zumindest im Bereich der Strecke X mit Rückfühmuten versehen sein. Somit kann überschüssiges Gleitmittel abgeführt werde.

Es kann auch vorteilhaft sein, wenn im Bereich des Füllrohrendes ein ringförmiges Abstreifelement um das Füllrohr angeordnet ist, das einen Druck auf die Wursthülle ausübt. Somit kann verhindert werden, dass Gleitmittel über das Füllrohrende zwischen pastöse Masse und Wursthülle tritt. Das zurückgehaltene Gleitmittel kann dann über die vorher genannten Rückführkanäle bzw. Nuten abgeführt werden.

Bei dem erfindungsgemäßen Verfahren kann die gefüllte Wursthülle im Anschluss an das Füllrohr durch einen Abdrehvorgang oder Einschnüren in Einzelportionen unterteilt werden. Das heißt, der gefüllte Wurststrang kann um seine Längsachse verdreht werden um eine Abdrehstelle zu erzeugen oder Verdrängerelemente können die Wursthülle in Einzelportionen unterteilen, ohne dass die Wursthülle verletzt wird.

Über die Fixierlösungszufuhr kann die Fixierlösung von außen zumindest im Anfangsbereich der Strecke X auf das extrudierte Hüllenmaterial aufgebracht werden. Wenn ein Gleitmittel verwendet wird und dieses zwischen Füllrohr und Hüllenmaterial eingepritzt wird, kann dieses Gleitmittel auch Verfestigungseigenschaften aufweisen, so dass gleichzeitig eine Verfestigung von innen stattfindet. Somit ist es möglich die Wursthülle von innen und außen zu verfestigen, um sie schneller für den nachfolgenden Verarbeitungsprozess zu stabilisieren.

Wenn das Gleitmittel zwischen Füllrohr und Hüllenmaterial eingebracht wird und das Gleitmittel weiter zwischen Wursthülle und pastöser Masse eingebracht wird ergibt sich ein einfaches Verschieben der pastösen Masse relativ zur Wursthülle aufgrund der fehlenden Bindung zwischen pastöser Masse und Wursthülle. Dies kann hilfreich sein bei nachfolgenden Prozessen, wie z.B. bei Verpackung der Produkte oder auch für den Fall, dass ein einfaches Entfernen (leichtes Abschälen der Hülle) erwünscht ist.

Ist kein Gleitmittel zwischen Wursthülle und pastöser Masse erwünscht, so wird das Gleitmittel im Endbereich des Füllrohrs abgeführt. Die Erfindung wird nachfolgend unter Bezugnahme der folgenden Zeichnungen näher erläutert.
- Fig. 1: zeigt eine Füllmaschine gemäß der vorliegenden Erfindung.
- Fig. 2: zeigt einen Querschnitt durch einen Koextrusionskopf gemäß einem ersten Ausführungsbeispiel der vorliegenden Erfindung.
- Fig. 3: zeigt einen Querschnitt durch einen Koextrusionskopf gemäß einem zweiten Ausführungsbeispiel der vorliegenden Erfindung.
- Fig. 4: zeigt einen Querschnitt durch ein drittes Ausführungsbeispiel gemäß der vorliegenden Erfindung.
- Fig. 5: zeigt einen Querschnitt durch einen Koextrusionskopf wie er aus dem Stand der Technik bekannt ist.

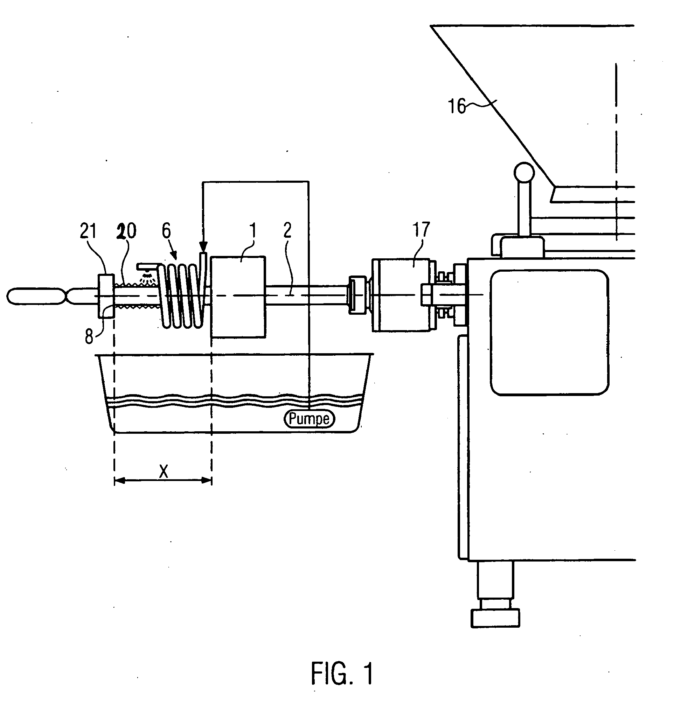

Wie aus der Fig. 1 hervorgeht, umfasst eine Füllmaschine in bekannter Weise einen Trichter 16, über welchen eine pastöse Masse, wie beispielsweise Wurstbrät, zu einem unter dem Trichter angeordneten Förderwerk geführt wird. Das Förderwerk bringt die pastöse Masse unter Druck in ein Füllrohr 2, so dass es in eine Wursthülle zur Erzeugung von Würsten geschoben wird. Mit Hilfe des Koextrusionskopfes 1 kann weiter die Wursthülle 20 für die Würste erzeugt werden. Zum Verfestigen des Hüllenmaterials ist ferner eine Einrichtung 6 zum Zuführen von Fixierlösung für das ausgestoßene Hüllenmaterial vorgesehen. Hier ist die Einrichtung als Ringdusche ausgebildet, durch die die zu verfestigende Wursthülle auf dem Füllrohr hindurchgeführt wird. Die Ringdusche ist mit einer Zufuhr für eine Fixierlösung verbunden, die mittels einer Pumpe aus einem weiteren Vorratsbehälter der Ringdusche zugeführt wird.

Nach dem Füllrohrende 8 können unterschiedliche Einrichtungen 21 nachgeordnet werden, wie schematisch in Fig. 1 dargestellt ist. Beispielsweise kann hier eine Abteileinrichtung vorgesehen sein, die den erzeugten Wurststrang abteilt, wenn er beispielsweise mit Hilfe des Antriebs 17 um die Längsachse A verdreht wird. Eine Abteileinrichtung, die beispielsweise die pastöse Masse des Wurststrangs durch Verdrängerelemente in Einzelwürste abteilt und/oder eine Förderrichtung, die den erzeugten Wurststrang bzw. die Einzelwürste in Transportrichtung T weiterfördert, können ebenfalls hinter dem Füllrohr angeordnet sein. Auf diese unterschiedlichen Einrichtungen soll hier jedoch nicht weiter eingegangen werden.

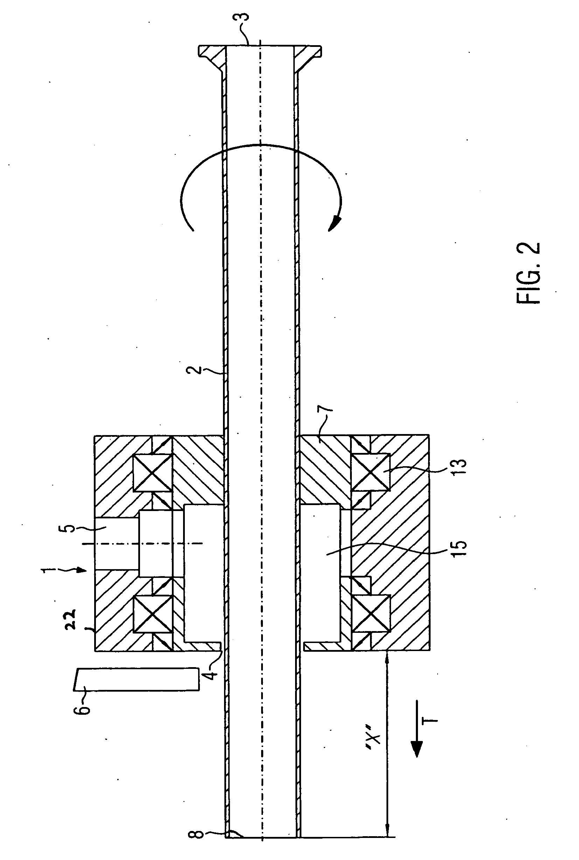

Fig. 2 zeigt einen Querschnitt durch ein erstes Ausführungsbeispiel gemäß der vorliegenden Erfindung. Wie aus Fig. 2 hervorgeht umfasst der Koextrusionskopf 1 ein Gehäuse 22, in dem die Extrudierdüse 7 zum Ausstoß von Hüllenmaterial über entsprechende Lager 13 drehbar gelagert ist. Das Gehäuse 22 weist eine Zufuhr 5 für Hüllenmassematerial auf. Die Extrudierdüse 7 umfasst einen Düsenhohlraum 15 über den das Hüllenmaterial über den Ringspalt 4 auf das Füllrohr 2 extrudiert werden kann. Das Füllrohr 2 erstreckt sich durch die Extrudierdüse 7. Das Füllrohr 2 ist zusammen mit der Extrudierdüse um die Längsachse des Füllrohrs, wie durch den Pfeil in Fig. 2 dargestellt, drehbar gelagert und kann für einen Abdrehvorgang zum Abteilen eines erzeugten Wurststrangs, gedreht werden. Der Koextrusionskopf 1 weist hier ein über den Ringspalt 4 verlängertes Füllrohr 2 auf. Das Füllrohr 2 steht eine Strecke X über den Ringspalt 4 hervor. Die Strecke X ist vorzugsweise 10 bis 200 mm lang, kann jedoch auch länger gewählt werden. Somit kann das Hüllenmaterial durch den Ringspalt 4 auf das Füllrohr 2 extrudiert werden, wobei sich das Hüllenmaterial auf der Strecke X verfestigen kann. Das extrudierte Hüllenmaterial bewegt sich dabei in Richtung Füllrohrende 8 in Transportrichtung T. Zum Aushärten ist hier eine Einrichtung zum Zuführen von Fixierlösung 6 vorgesehen, die vorzugsweise um das Füllrohr wie in Fig. 1 dargestellt ist , angeordnet ist, und die Fixierlösung auf das ausgestoßene Hüllenmaterial von außen aufbringt. Somit kann das Hüllenmaterial, beispielsweise Alginat, durch Aufbringen von beispielsweise einer Fixierlösung (z.B. Kalziumchloridlösung) sich verfestigen.

Durch die verlängerte Tülle, d.h. das verlängerte Füllrohr, kann somit die Aushärtezeit effektiv auf mehr als 1 s verlängert werden. Am Ende 8 des Füllrohrs 2 ist das ausgestoßene Hüllenmaterial ausreichend verfestigt und kann nachfolgenden Verarbeitungsschritten zugeführt werden. Erst jetzt wird die pastöse Masse, die über die Zufuhr 3 dem Füllrohr unter Druck zugeführt wurde, ausgestoßen werden. Dabei wird die pastöse Masse in die Wursthülle 20 geschoben, wodurch Wursthülle 20 vom Füllrohr 2 abgezogen wird, so dass sich die Wursthülle bzw. das ausgestoßene Hüllenmaterial in Transportrichtung T bewegt. Damit sich das ausgestoßene Hüllenmaterial bzw. die Wursthülle gut in Transportrichtung T bewegen lässt ist es vorteilhaft, wenn das Füllrohr 2 im Außenbereich gute Gleiteigenschaften aufweist. Vorzugsweise ist die Oberfläche des Füllrohrs zumindest im Bereich der Strecke X so ausgebildet, dass sie einen Gleitreibungskoeffizienten µ in einem Bereich von 0,01 bis 0,1 aufweist. Dies kann beispielsweise erfolgen, indem zumindest im Bereich X des Füllrohrs 2 eine Beschichtung zur Verringerung der Gleitreibung aufgebracht wurde. Somit kann gemäß der vorliegenden Erfindung bereits am Ende des Füllrohrs 2 eine stabile verfestigte Wursthülle 20 bereitgestellt werden, die nachfolgenden Verarbeitungsschritten Stand hält. Somit ist es beispielsweise möglich, ein Einschnüren und Abdrehen direkt im Anschluss an das Füllrohr 2 z.B. durch eine Abdreheinrichtung 21, 17 durchzuführen, wobei die Wursthülle zusammen mit dem Füllrohr 2 und der Extrusionsdüse 7 um die Längsachse über den Antrieb 17 verdreht wird, während der gefüllte Wurststrang über die Einrichtung 21 gegen Verdrehen gehalten wird, so dass eine Einschnürung erzeugt werden kann. Ein Unterteilen ist ebenfalls durch Verdrängen der pastösen Masse im gefüllten Wurststrang, beispielsweise durch Verdrängerarme oder Scheren etc. möglich. Es ist auch möglich, die Strecke X zusätzlich als Pufferstrecke zu nutzen, um eine Wursthülle direkt auf dem Füllrohr als Vorrat bereitzustellen. Dann wird die Strecke x entsprechend länger gewählt. Die vorliegende Erfindung ermöglicht also die Herstellung einer fortlaufenden Wursthülle, so dass ein kontinuierlicher Prozess möglich ist.

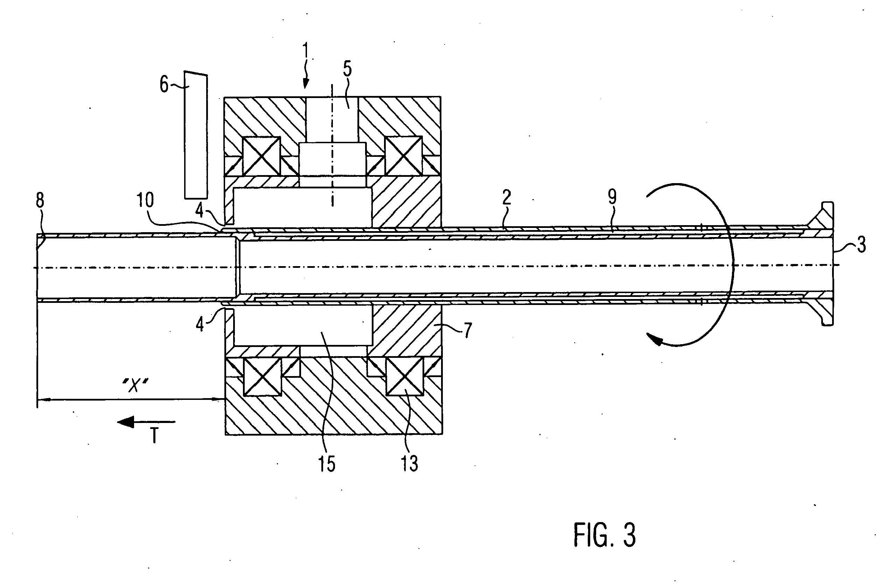

Fig. 3 zeigt einen Querschnitt durch ein zweites Ausführungsbeispiel gemäß der vorliegenden Erfindung. Soll der Gleitwert zwischen dem Füllrohr und dem ausgestoßenen Hüllenmaterial bzw. der herzustellenden Wursthülle minimiert werden, so kann zusätzlich ein Gleitmittel, wie beispielsweise Wasser zugeführt werden. Das in Fig. 3 gezeigte Ausführungsbeispiel entspricht dem in Fig. 2 gezeigten Ausführungsbeispiel mit der Ausnahme, dass hier weiter eine Gleitmitteleinrichtung zum Zuführen eines Gleitmittels vorgesehen ist. Die Gleitmitteleinrichtung umfasst eine Zufuhr 9 für das Gleitmittel. Die Zufuhr 9 ist hier als Kanal im Füllrohr 2, ausgebildet. Insbesondere verläuft hier der Kanal ringförmig in der Füllrohrwandung. Im Bereich des Ringspaltes 4 ist hier ein weiterer Ringspalt 10 um die Auβenfläche des Füllrohrs 2 angeordnet. Dazu weist das Füllrohr 2 im Bereich hinter dem weiteren Ringspalt 10 einen kleineren Durchmesser auf als das Füllrohr 2 in einem Bereich vor dem Ringspalt 10. Über den Ringspalt 10 kann eine Inneneinspritzung des Gleitmittels zwischen dem ausgestoßenen Hüllenmaterial und der Oberfläche des Füllrohrs 2 erfolgen. Somit kann das ausgestoßene Hüllenmaterial, d.h. die zu erzeugende Wursthülle gut auf dem Füllrohr 2 in Richtung Füllrohrende 8 gleiten. Das Einspritzen des Gleitmittels dient also als Hilfsmittel zur Verringerung des Reibungskoeffizienten an der Oberfläche des Füllrohrs. Zu diesem Zweck können auch im Verlauf der Strecke X zusätzliche Öffnungen angeordnet sein, durch die zusätzliche Gleitmittel eingespritzt werden kann, damit im Laufe der Strecke X der Gleitfilm nicht abreißen kann. Das Gleitmittel wird dann bei Ausstoß der pastösen Masse durch das Füllrohr 2 in die Wursthülle 20, auch zwischen Wursthülle 20 und der pastösen Masse eingebracht. Dies ermöglicht ein einfaches Verschieben der pastösen Masse relativ zur Wursthülle 20 aufgrund der fehlenden Bindung zwischen Innenmasse und Wursthülle. Dies kann hilfreich sein bei nachfolgenden Prozessen, wie z.B. bei der Verpackung der Produkte oder auch für den Fall, dass ein einfaches Entfernen (leichtes Abschälen) der Hülle erwünscht ist.

Es ist vorteilhaft, wenn das Gleitmittel zusätzlich Verfestigungseigenschaften für die Wursthülle besitzt. Somit ist es möglich, die zu erzeugende Wursthülle von innen und von außen zu verfestigen, um sie schneller für den nachfolgenden Verarbeitungsprozess zu stabilisieren.

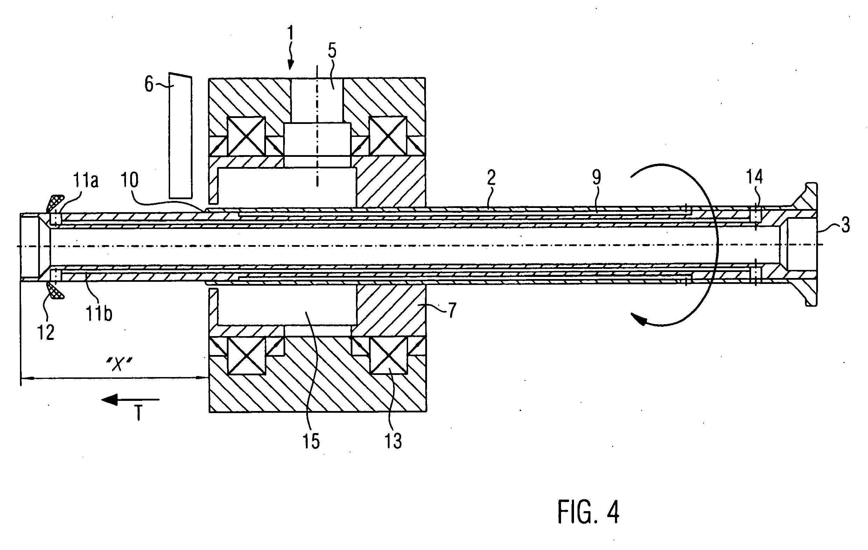

Fig. 4 zeigt einen Querschnitt durch ein drittes Ausführungsbeispiel gemäß der vorliegenden Erfindung. Das in Fig. 4 gezeigte Ausführungsbeispiel entspricht dabei im Wesentlichen dem in Fig. 3 gezeigten Ausführungsbeispiel. Es ist nicht in allen Fällen erwünscht, dass das Gleitmittel wie bei dem zweiten Ausführungsbeispiel zwischen die pastöse Masse und die Wursthülle eingebracht wird. Dazu kann gemäß der vorliegenden Erfindung eine Einrichtung vorgesehen sein, die im Endbereich des Füllrohrs 2 das Gleitmittel derart rückführt, so dass kein oder nur sehr wenig Gleitmittel zwischen die Wursthülle und die ausgestoßene pastöse Masse gelangt. Wie aus Fig. 4 hervorgeht, kann dazu im Endbereich des Füllrohrs 2 mindestens eine Öffnung, beispielsweise eine Ringöffnung 11a vorgesehen sein, die mit mindestens einem Rückführkanal 11 b in Verbindung steht. Der mindestens eine Rückführkanal 11 b kann ebenfalls z.B. ringförmig im Füllrohr 2 angeordnet sein. Über diesen Kanal oder die Kanäle 11 b kann das Gleitmittel über die Abführöffnung 14 im Füllrohr 2wieder der Gleitmittelversorgung zurückgeführt werden, um erneut verwendet zu werden. Damit das Gleitmittel besser über die Öffnung 11a im Füllrohr abgeführt werden kann ist in Transportrichtung T hinter der Öffnung 11a ein ringförmiges Abstreifelement 12 um das Füllrohr 2 angeordnet, das einen Druck auf die Wursthülle 20 ausübt. Das Abstreifelement 12 ist aus elastischem Material gebildet und weist hier einen keilförmigen Querschnitt auf, wobei lediglich die Spitze auf die Wursthülle drückt. Somit kann der Gleitmittelstrom gestoppt werden und in die Öffnung 11a gelenkt werden.

Alternativ zu der in Fig. 4 gezeigten Einrichtung zum Ableiten bzw. Rückführen des Gleitmittels wäre es aber auch denkbar, die Außenseite des Füllrohrs 2 mit Rückführnuten zu versehen. Über das Abstreifelement 12 kann dann das Gleitmittel aufgestaut werden und in den Rückführnuten entgegen der Transportrichtung T abgeleitet werden.

Nachfolgend wird das erfindungsgemäße Verfahren unter Bezugnahme der Fig. 2 bis 4 näher erläutert. Zur Herstellung von Würsten wird dabei, wie zuvor beschrieben, Hüllenmaterial, das über die Zufuhr 5 der Extrudierdüse 7 zugeführt wird, über den Ringspalt 4 auf die Oberfläche des Füllrohrs 2 ausgestoßen. Zumindest im Anfangsbereich der Strecke X des über den Ringspalt 4 vorstehenden Füllrohrs 2, wird über eine Einrichtung 6 Fixierlösung auf die Oberfläche des ausgestoßenen Hüllenmaterials aufgebracht. Das Hüllenmaterial gleitet in Transportrichtung T über die Füllrohroberfläche und härtet dabei bis zum Ende 8 des Füllrohrs aus, so dass die erzeugte Wursthülle 20 nachfolgenden Behandlungsschritten unterzogen werden kann. Über das Füllrohr 2 gelangt über die Zufuhr 3 pastöse Masse zum Füllrohrende 8 und füllt hier die vorab erzeugte Wursthülle 20. Beim Ausstoßen der pastösen Masse wird gleichzeitig Hüllenmaterial 20 von dem Füllrohr 2 abgezogen, wie es beispielsweise auch bei Herstellung von Würsten der Fall ist, bei der Wursthülle auf dem Füllrohr gerafft ist. Somit kann also gemäß der vorliegenden Erfindung eine fortlaufende Wursthülle, d.h. eine "unendliche" Wursthülle erzeugt werden, die einen kontinuierlichen Prozess ermöglicht. Da die erzeugte Wursthülle 20 am Ende 8 des Füllrohrs bereits stark verfestigt ist, kann unmittelbar nach dem Füllrohr ein Einschnüren oder Abdrehen des gefüllten Wurststrangs erfolgen. Beim Abdrehen wird dazu beispielsweise über einen Antrieb 17 das Füllrohr 2 zusammen mit der Extrudierdüse 7 um die Längsachse des Füllrohrs gedreht, während der gefüllte Wurststrang über die Einrichtung 21 gegen Verdrehen gehalten werden kann. Somit entsteht eine Abschnürstelle zwischen einzelnen Portionen. Alternativ kann der gefüllte Wurststrang auch durch Verdrängen der pastösen Masse im Wurststrang mit Hilfe von Verdrängerelementen unterteilt werden, wobei dann die Würste mit Clips verschlossen werden. Wenn auch nicht in den Figuren dargestellt kann die Vorrichtung auch weiter eine Transporteinrichtung, z.B. gegenüberliegende Transportrollen oder Bänder aufweisen, die den gefüllten Wurststrang oder die Einzelportionen in Transportrichtung T bewegen.

Gemäß einem bevorzugten Verfahren wird zwischen Füllrohr 2 und dem Hüllenmaterial ein Gleitmittel eingespritzt. Das Gleitmittel kann auch Verfestigungseigenschaften aufweisen, so dass die zu erzeugende Wursthülle von außen und innen aushärtet. Dabei kann das Gleitmittel entweder zusammen mit der zu erzeugenden Wursthülle in Transportrichtung T auf die ausgestoßene pastöse Masse, d.h. zwischen die pastöse Masse und die Wursthülle 20 gebracht werden, oder aber über eine entsprechende Einrichtung im Endbereich des Füllrohrs 2 zurückgehalten und rückgeführt werden, damit kein Gleitmittel oder nur sehr wenig Gleitmittel zwischen Wursthülle und pastöser Masse verbleibt.

Bei Produktionsanfang, d. h. vor der Produktion der ersten Portion wird das über das Füllrohr extrudierte Hüllenmaterial vorsichtig manuell abgezogen und manuell durch nachfolgende Baugruppen gefädelt. Die Ware aus dem Produktionsanfang wird ggf. vor einer weitern Verarbeitung uns der Produktionslinie ausgeschleust.

## Patentansprüche

1. Vorrichtung zum Herstellen von Würsten aus einer pastösen Masse, insbesondere Wurstbrät mit einem Koextrusionskopf (1) zum Koextrudieren der pastösen Masse und eines Hüllenmaterials für eine Wursthülle (20), wobei der Koextrusionskopf (1) ein Füllrohr (2) zum Ausstoßen der pastösen Masse, sowie eine dem Füllrohr (2) zugeordnete Extrusionsdüse (7) mit einem Extrusionsspalt (4) zum Ausstoßen des Hüllenmaterials umfasst, **dadurch gekennzeichnet, dass**
das Füllrohr (2) über eine Strecke X so über den Ringspalt (4) vorsteht, dass das Hüllenmaterial durch den Ringspalt (4) auf das Füllrohr (2) extrudiert wird und sich entlang dem Füllrohr verfestigen kann, und dass die Vorrichtung eine Einrichtung (6) zum Zuführen von Fixierlösung auf das ausgestoßene Hüllenmaterial umfasst, die zumindest in einem Teilbereich der Strecke X, insbesondere am Anfang der Strecke X angeordnet ist.

2. Vorrichtung nach Anspruch 1, **dadurch gekennzeichnet, dass** die Stecke X >= 10 - 200 mm beträgt.

3. Vorrichtung nach mindestens einem der Ansprüche 1 bis 2, **dadurch gekennzeichnet, dass** die Oberfläche des Füllrohrs (2) zumindest im Bereich der Strecke X einen niedrigen Gleitreibungskoeffizienten µ, der niedriger als der von poliertem Edelstahl ist, aufweist.

4. Vorrichtung nach mindestens einem der Ansprüche 1 bis 3, **dadurch gekennzeichnet, dass** die Vorrichtung weiter eine Gleitmitteleinrichtung (19) zum Zuführen eines Gleitmittels zwischen Füllrohr (2) und ausgestoßenem Hüllenmaterial umfasst.

5. Vorrichtung nach Anspruch 4, **dadurch gekennzeichnet, dass** die Gleitmitteleinrichtung (9, 10) eine Zufuhr (9) für Gleitmittel umfasst, die im Füllrohr angeordnet ist, sowie einen Ringspalt (10) über den das Gleitmittel auf die Oberfläche des um die Strecke X vorstehenden Füllrohrs (2) ausgestoßen wird.

6. Vorrichtung nach mindestens einem der Ansprüche 1 bis 5, **dadurch gekennzeichnet, dass** im Endbereich des Füllrohrs (2) mindestens eine Öffnung eines Rückführkanals (11) für das Gleitmittel vorgesehen ist.

7. Vorrichtung nach mindestens einem der Ansprüche 1 bis 6, **dadurch gekennzeichnet, dass** die Außenseite des Füllrohrs (2) zumindest im Bereich der Strecke X mit Rückfühmuten für das Gleitmittel versehen ist.

8. Vorrichtung nach mindestens einem der Ansprüche 1 bis 7, **dadurch gekennzeichnet, dass** im Bereich des Füllrohrendes (8) ein ringförmiges Anstreifelement (12) um das Füllrohr (2) angeordnet ist, das einen Druck auf die Wursthülle (20) ausübt.

9. Verfahren zum Herstellen von Würsten mit folgenden Schritten:
Erzeugen einer fortlaufenden Wursthülle (20), indem Hüllenmaterial auf ein Füllrohr (2) extrudiert wird und um eine bestimmte Strecke X in Richtung Füllrohrende (8) bewegt wird,
Verfestigen des extrudierten Hüllenmaterials auf der Strecke X des Füllrohrs (2), und
Ausstoßen von pastöser Masse durch das Füllrohr (2) und Befüllen der Wursthülle (20) mit der pastösen Masse, wobei die Wursthülle (20) vom Füllrohr (2) abgezogen wird.

10. Verfahren nach Anspruch 9, **dadurch gekennzeichnet, dass** die gefüllte Wursthülle über einen Abdrehvorgang oder durch Einschnüren in Einzelportionen im Anschluss an das Füllrohr unterteilt wird.

11. Verfahren nach Anspruch 9 oder 10, **dadurch gekennzeichnet, dass** zum Verfestigen des extrudierten Hüllenmaterials Fixierlösung von außen zumindest im Anfangsbereich der Strecke X auf das extrudierte Hüllenmaterial aufgebracht wird.

12. Verfahren nach mindestens einem der Ansprüche 9 bis 11, **dadurch gekennzeichnet, dass** Gleitmittel zwischen Füllrohr (2) und ausgestoßenem Hüllenmaterial eingebracht wird.

13. Verfahren nach Anspruch 12, **dadurch gekennzeichnet, dass** das Gleitmittel Verfestigungseigenschaften aufweist.

14. Verfahren nach einem der Ansprüche 12 oder 13, **dadurch gekennzeichnet, dass** das Gleitmittel weiter zwischen Wursthülle (20) und pastöse Masse eingebracht wird.

15. Verfahren nach mindestens einem der Ansprüche 12 bis 14, **dadurch gekennzeichnet, dass** das Gleitmittel im Endbereich des Füllrohrs (2) abgeführt wird, derart, dass kein Gleitmittel zwischen Wursthülle und pastöser Masse eingebracht wird.

## Claims

1. Device for the manufacture of sausages from a paste mass, in particular sausage meat with a coextrusion head (1) for coextruding the paste mass and a casing material for a sausage casing (20), wherein the coextrusion head (1) comprises a filling tube (2) for the ejection of the paste mass, as well as an extrusion die (7) assigned to the filling tube (2), the said extrusion die having an extrusion gap (4) for ejecting the casing material, **characterised in that**
the filling tube (2) protrudes beyond the annular gap (4) by a distance X such that the casing material is extruded through the annular gap (4) onto the filling tube (2) and can solidify along the filling tube, and that the device comprises a device (6) for feeding fixing solution onto the ejected case material, the said device (6) being at least arranged in a partial region of the distance X, in particular at the start of the distance X.

2. Device according to Claim 1, **characterised in that** the distance X >= 10 - 200 mm.

3. Device according to at least one of the Claims 1 to 2, **characterised in that** the surface of the filling tube (2) has at least in the region of the distance X a low sliding friction coefficient µ which is lower than that of polished stainless steel.

4. Device according to at least one of the Claims 1 to 3, **characterised in that** the device furthermore comprises a lubricating device (19) for feeding a lubricant between filling tube (2) and ejected casing material.

5. Device according to Claim 4, **characterised in that t**he lubricating device (9, 10) comprises a feed (9) for lubricant, which is arranged in the filling tube, as well as an annular gap (10) through which the lubricant is ejected onto the surface of the filling tube (2) protruding by the distance X.

6. Device according to at least one of the Claims 1 to 5, **characterised in that** in the end section of the filling tube (2) at least one opening of a return channel (11) is provided for the lubricant.

7. Device according to at least one of the Claims 1 to 6, **characterised in that** return grooves for the lubricant are provided in the outer side of the filling tube (2) at least in the region of the distance X.

8. Device according to at least one of the Claims 1 to 7, **characterised in that** in the region of the filling tube end (8) an annular stripping element (12) is arranged around the filling tube (2) which exerts a pressure on the sausage casing (20).

9. Method for the manufacture of sausages with the following steps:
production of a continuous sausage casing (20), in which casing material is extruded onto a filling tube (2) and is moved by a certain distance X in the direction of the filling tube end (8),
solidification of the extruded casing material on the distance X of the filling tube (2), and
ejection of paste mass through the filling tube (2) and filling the sausage casing (20) with the paste mass, wherein the sausage casing (20) is drawn off the filling tube (2).

10. Method according to Claim 9, **characterised in that** the filled sausage casing is divided by a twist-off process or by constriction into single portions following the filling tube.

11. Method according to Claim 9 or 10, **characterised in that** fixing solution is applied externally at least in the starting region of the distance X onto the extruded casing material to solidify the extruded casing material.

12. Method according to at least one of the Claims 9 to 11, **characterised in that** lubricant is introduced between filling tube (2) and ejected casing material.

13. Method according to Claim 12, **characterised in that** the lubricant exhibits solidifying properties.

14. Method according to one of the Claims 12 or 13, **characterised in that** the lubricant furthermore is introduced between sausage casing (20) and paste mass.

15. Method according to at least one of the Claims 12 to 14, **characterised in that** the lubricant is drawn off in the end section of the filling tube (2) such that no lubricant is introduced between sausage casing and paste mass.

## Revendications

1. Dispositif de fabrication de saucisses constituées d'une masse pâteuse, en particulier de chair à saucisses, comprenant une tête de coextrusion (1) pour la coextrusion de la masse pâteuse et d'une matière de boyau pour un boyau de saucisse (20), la tête de coextrusion (1) comportant un tube de remplissage (2) pour l'éjection de la masse pâteuse, ainsi qu'une filière d'extrusion (7), associée au tube de remplissage (2), avec une fente d'extrusion (4) pour l'éjection de la matière de boyau, **caractérisé en ce que**
le tube de remplissage (2) dépasse sur une section X de la fente annulaire (4), de sorte que la matière de boyau est extrudée au travers de la fente annulaire (4) sur le tube de remplissage (2) et peut se durcir le long du tube de remplissage, et que le dispositif comporte un appareillage (6) pour l'arrivée de solution de fixation sur la matière de boyau éjectée, lequel appareillage est disposé au moins dans une zone partielle de la section X, en particulier au début de la section X.

2. Dispositif suivant la revendication 1, **caractérisé en ce que** la section X est.> = 10 - 200 mm.

3. Dispositif suivant l'une au moins des revendications 1 à 2, **caractérisé en ce que** la surface du tube de remplissage (2) présente au moins dans la zone de la section X un bas coefficient de frottement par glissement µ, qui est plus faible que celui d'acier spécial poli.

4. Dispositif suivant l'une au moins des revendications 1 à 3, **caractérisé en ce que** le dispositif comprend en outre un système de lubrification (9, 10) pour l'arrivée d'un lubrifiant entre le tube de remplissage (2) et la matière de boyau éjectée.

5. Dispositif suivant la revendication 4, **caractérisé en ce que** le système de lubrification (9, 10) comporte une arrivée (9) pour du lubrifiant, disposée dans le tube de remplissage, ainsi qu'une fente annulaire (10), au travers de laquelle le lubrifiant est éjecté sur la surface du tube de remplissage (2) dépassant de la section X.

6. Dispositif suivant l'une au moins des revendications 1 à 5, **caractérisé en ce qu'**au moins une ouverture d'un canal de retour (11) pour le lubrifiant est prévue dans la zone extrême du tube de remplissage (2).

7. Dispositif suivant l'une au moins des revendications 1 à 6, **caractérisé en ce que** le côté extérieur du tube de remplissage (2) est muni de gorges de retour pour le lubrifiant, au moins dans la zone de la section X.

8. Dispositif suivant l'une au moins des revendications 1 à 7, **caractérisé en ce qu'**un élément de raclage annulaire (12), qui exerce une pression sur le boyau de saucisse (20), est disposé autour du tube de remplissage (2) dans la zone de l'extrémité (8) de ce dernier.

9. Procédé de fabrication de saucisses comprenant les étapes suivantes :
production d'un boyau de saucisse (20) continu, de la matière de boyau étant extrudée sur un tube de remplissage (2) et déplacée d'une section définie X en direction de l'extrémité (8) du tube de remplissage,
durcissement de la matière de boyau extrudée sur la section X du tube de remplissage (2), et
éjection de la masse pâteuse au travers du tube de remplissage (2) et remplissage du boyau de saucisse (20) par la masse pâteuse, le boyau de saucisse (20) étant alors retiré du tube de remplissage (2).

10. Procédé suivant la revendication 9, **caractérisé en ce que** le boyau de saucisse rempli est subdivisé en portions individuelles à la suite du tube de remplissage par une opération de séparation par torsion ou par étranglement.

11. Procédé suivant l'une des revendications 9 et 10, **caractérisé en ce que**, pour le durcissement de la matière de boyau extrudée, de la solution de fixation est appliquée de l'extérieur sur la matière de boyau extrudée, au moins dans la zone initiale de la section X.

12. Procédé suivant l'une au moins des revendications 9 à 11, **caractérisé en ce que** le lubrifiant est introduit entre le tube de remplissage (2) et la matière de boyau éjectée.

13. Procédé suivant la revendication 12, **caractérisé en ce que** le lubrifiant présente des propriétés de durcissement.

14. Procédé suivant l'une des revendications 12 et 13, **caractérisé en ce que** le lubrifiant est en outre introduit entre le boyau de saucisse (20) et la masse pâteuse.

15. Procédé suivant l'une au moins des revendications 12 à 14, **caractérisé en ce que** le lubrifiant est évacué dans la zone extrême du tube de remplissage (2), de telle sorte qu'aucun lubrifiant n'est introduit entre le boyau de saucisse et la masse pâteuse.
